# EUROPEAN PATENT SPECIFICATION

(11) **EP 1 888 926 B1**
(45) Date of publication and mention of the grant of the patent: **14.03.2012**
(21) Application number: 06743917.4
(22) Date of filing: 16.05.2006
(51) Int. Cl.: F16B 41/00, F16B 4/00

(54) **FASTENING ASSEMBLY**
BEFESTIGUNGSANORDNUNG
ENSEMBLE DE FIXATION

(30) Priority: 03.06.2005 GB 0511349
(43) Date of publication of application: 20.02.2008
(73) Proprietor: Nifco UK Limited, Stockton on Tees TS18 3RX (GB)
(72) Inventor: MACDONALD, John Peter, Stockton on Tees TS18 3RX (GB)
(74) Representative: Archer, Graham John
(86) International application number: PCT/GB2006/001818
(87) International publication number: WO 2006/129055

(56) References cited:
- DE-A1- 19 523 932
- DE-U1- 9 316 108
- JP-A- 58 013 217

## Description

The present invention relates to a fastening assembly and relates particularly, but not exclusively, to a fastening assembly for fastening moulded plastic components to components formed from materials harder than moulded plastics, such as metal components.

Moulded plastic components are sometimes required to be fastened by screws or bolts onto metallic components. For example, in some motor vehicle engines a plastic thermostat housing must be fitted to an engine block. When a screw or bolt is used to fasten the thermostat housing to the engine block by passing through a hole in the edge of the thermostat housing, then the plastic may stress-relax or creep over time, reducing the load on the screw, which can eventually lead to the screw becoming loose.

A solution to this problem involves fitting a metal sleeve known as a compression limiter in the hole in the plastic moulding through which the screw is to pass. This reinforces the hole and limits the compression to which the plastic moulding will be exposed.

It is desirable for the manufacturer of the plastic moulding to fit compression limiters and screws in a way such that the screws do not fall out of the compression limiters during transit to the purchaser, so that when the purchaser receives the plastic moulding, the screw is already in place to be screwed into the component to which the plastic moulding is to be fitted. Several solutions to this problem have been proposed.

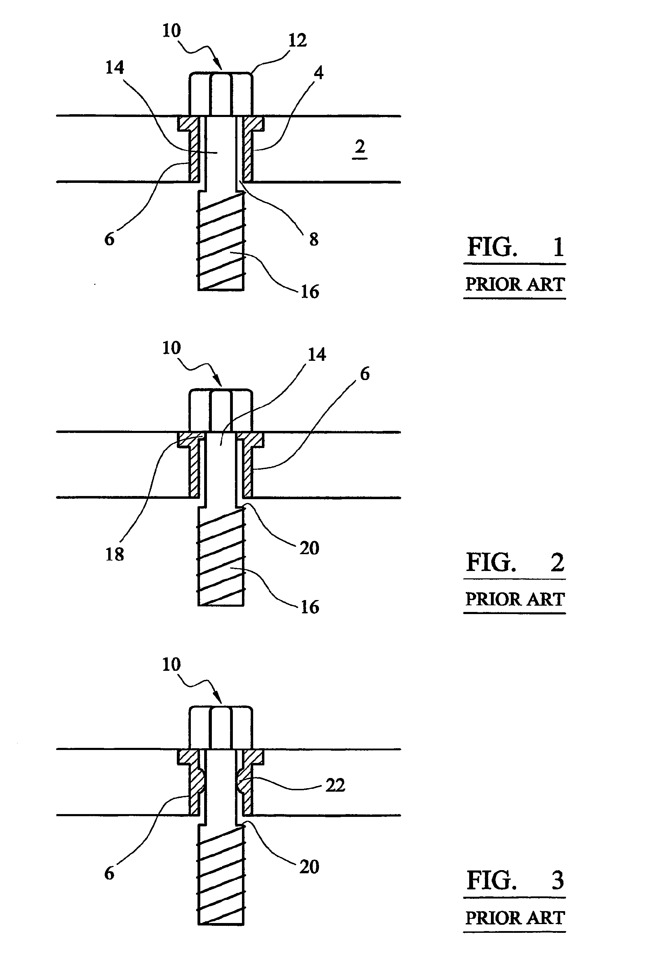

Referring to Figure 1, which is a cross-section of a prior art fastening assembly, a plastic moulding 2 has a hole 4 formed in it, in which a compression limiter 6 in the form of a metallic sleeve is fitted. The compression limiter 6 defines a central aperture 8 through which a screw 10 is fitted. The screw 10 comprises a head 12, an unthreaded portion 14 and a threaded portion 16. The unthreaded portion 14 has a smaller diameter than the threaded portion 16. It should be noted that in this configuration, the screw 10 can be pulled upwardly out of the compression limiter 6 as there is nothing to retain the screw 10 in the compression limiter.

Referring to Figure 2, which is a cross-sectional view of a compression limiter having a retaining means for the screw, the compression limiter 6 has an internal flange 18 formed around its upper edge. If the screw is pulled upwardly through the compression limiter 6, a shoulder portion 20 formed between the unthreaded portion 14 and the threaded portion 16 of the screw abuts the flange 18 to prevent removal of the screw 10 from the compression limiter 6.

The fastening assembly of Figure 2 suffers from the drawback that it is expensive to form an internal flange on the metal compression limiter 6 to retain the screw in the compression limiter, which increases the cost of manufacturing the fastening assembly.

Referring to Figure 3, which is a cross-section of another prior art assembly for retaining a screw in a compression limiter, a plurality of dents 22 are punched in the surface of the compression limiter 6 such that they protrude into the internal aperture 8 of the compression limiter to prevent removal of the screw. If the screw 10 is pulled upwardly through the compression limiter, the shoulder 20 of the screw 10 abuts the dents 22.

The fastening assembly of Figure 3 also suffers from the drawback that it is expensive to form dents in the compression limiter, which increases the cost of manufacturing the fastening assembly.

JP5813217 describes a compression limiter assembly that is pre-moulded into a plastic housing. The compression limiter has one or more recesses formed in its outer surface into which plastic is moulded to hold the compression limiter in place. A plurality of tabs are moulded to project through the limiter to abut a screw and hold the screw in place within the limiter.

The assembly of JP5813217 suffers from the drawback that the compression limiter has to be loaded into the plastic injection mould tool prior to the injection of molten plastic. This process is costly and time consuming. Also, the compression limiters have to have recesses formed on their outer surfaces in order to ensure that the limiters will remain in place when moulded into the plastic, which also increases cost.

Preferred embodiments of the present invention seek to overcome the above disadvantages of the prior art.

According to the present invention, there is provided a fastening assembly for fastening a first component to a second component, the assembly comprising the features of claim 1.

By providing at least one projection adapted to project inwardly in at least one said hole to abut a screw passing through the hole to resist removal of the screw from the hole, this provides the advantage that the sleeve does not have to be modified in any way in order to retain the screw in the sleeve. This means that the sleeve can be formed by simply rolling a sheet of suitable metal into a cylindrical shape. Also, since the sleeve has a substantially constant cross-section to enable the sleeve to be inserted into the hole in an interference fit, the sleeve does not have to be pre-mounted in a moulding tool to form the assembly. These features therefore reduce the cost and manufacturing complexity of the fastening assembly.

In a preferred embodiment, at least one said projection is formed integrally with the first component.

This provides the advantage that the means for holding the screw in the compression limiter sleeve can be pre-formed with the first component such that the first component does not have to be modified in any way or have any additional components added in order to provide the means for retaining the screw in the compression limiter.

At least one said screw may further comprise a respective unthreaded portion having a smaller diameter than the corresponding threaded portion, wherein at least one said projection is adapted to abut the unthreaded portion to resist removal of the screw from the hole.

In a preferred embodiment, the unthreaded portion of at least one said screw has a diameter such that there is a gap between the unthreaded portion of the respective screw and an inner surface of the corresponding sleeve when the unthreaded portion of the screw is disposed in the sleeve.

This provides the advantage that the screw can move by a small amount relative to the sleeve in directions transverse to the axis of the screw. This is advantageous because it means that the screw can move slightly to allow for small differences in the positions of the fastening assembly on the first component, and a corresponding screw hole in the second component.

The assembly may further comprise at least one notch formed in at least one said sleeve for engaging a respective said projection.

This provides the advantage of providing means to align the sleeve in the hole formed in the first component, and also provides means to prevent rotation of the sleeve relative to the hole during screwing of the screw.

At least one said sleeve may comprise two substantially diametrically opposed notches formed at each end of the sleeve.

This provides the advantage of simplifying alignment of the sleeve with the or each projection formed in the corresponding hole, and therefore reduces the cost of manufacturing the assembly.

At least one said sleeve may be formed from a harder material than the portion of the first component in which the respective hole is disposed.

Said portion of the first component may be formed from moulded plastics material.

According to another aspect of the present invention, there is provided a method of forming a fastening assembly for fastening a first component to a second component, the method comprising the steps of claim 7.

This provides the advantage of reducing the cost and manufacturing complexity of the fastening assembly.

In a preferred embodiment, the method further comprises inserting a screw into the hole, the screw having a threaded portion adapted to extend beyond the hole.

Preferred embodiments of the present invention will now be described, by way of example only and not in any limitative sense, with reference to the accompanying drawings in which:-
Figure 1 is a cross-sectional view of a first prior art fastening assembly;
Figure 2 is a cross-sectional view of a second prior art fastening assembly;
Figure 3 is a cross-sectional view of a third prior art fastening assembly;
Figure 4 is a perspective view of a thermostat housing embodying the present invention mounted on an engine block;
Figure 5 is a perspective view of a fastening assembly for mounting the thermostat housing of Figure 4;
Figure 6 is a cross-sectional view of the fastening assembly of Figure 5 and;
Figure 7 is a exploded view of the fastening assembly of Figure 5.

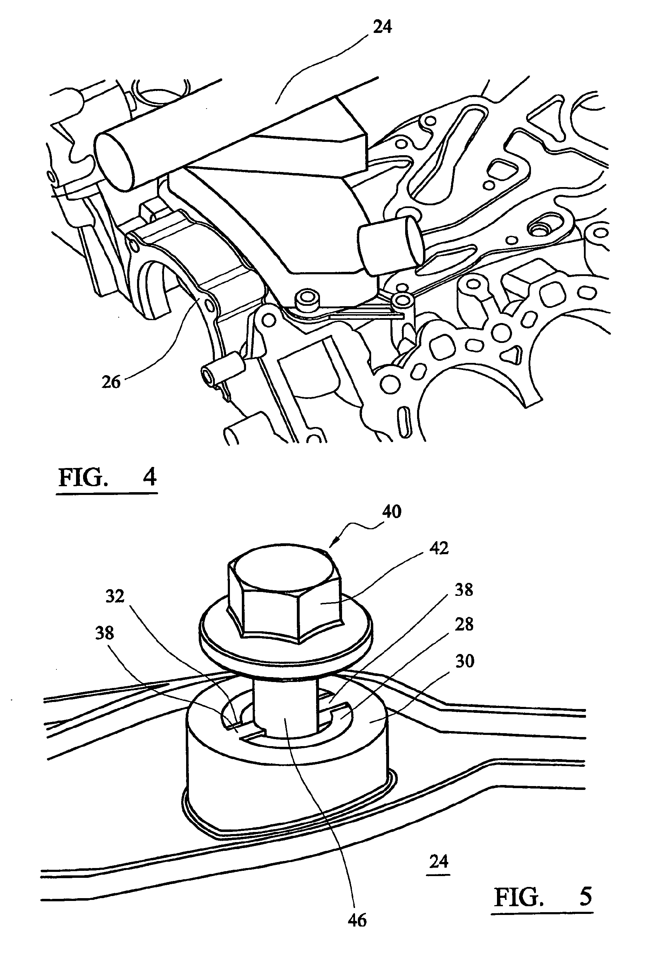

Referring to Figure 4, a moulded plastic component such as a thermostat housing 24 is mounted to a metallic component such as an engine block 26 of a motor vehicle (not shown). The thermostat housing 24 will generally be screwed into the engine block 26.In order to withstand the compressive load from the screws, the holes (not shown) formed in the thermostat housing 24 are reinforced by metallic sleeves called compression limiters 28 (Figure 5).

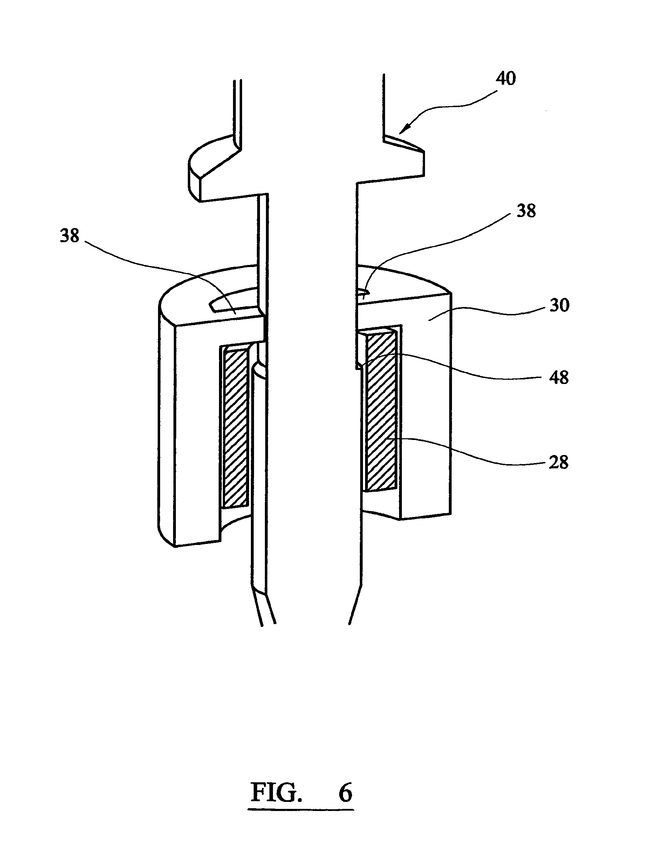

Referring to Figures 5 to 7, a cylindrical boss 30 is integrally formed in the moulded plastic of the thermostat housing 24. A compression limiter 28 formed from stripped steel rolled into a cylinder is inserted into the centre of the cylindrical boss 30 such that the longitudinal axis of the compression limiter 28 is coaxial with the longitudinal axis of the cylindrical boss 30. The compression limiter 28 is inserted into the boss 30 by a simple interference fit. Consequently, the diameters of the compression limiter 28 and boss 30 are chosen such that the boss 28 grips and retains the compression limiter.

The compression limiter 28 has four recesses 32 formed into is upper and lower edges 34 and 36. Recesses 32 are adapted to engage a pair of tabs 38 integrally formed with the cylindrical boss 30 in order to align the compression limiter 28 in the cylindrical boss 30.

A screw 40 comprises a head 42 and a shank having a threaded portion 44 and an unthreaded portion 46 separated by shoulder 48. The threaded portion 44 has a larger diameter than the unthreaded portion 46. When the screw 40 is inserted into the compression limiter 28 and cylindrical boss 30, removal of the screw 40 from the compression limiter 28 and cylindrical boss 30 is prevented because as screw 40 is pulled upwardly in sleeve 28, the shoulder 48 formed on the screw 40 eventually contacts tabs 38 formed on the cylindrical boss 30 and prevent removal of the screw 40. This means that when the thermostat housing 24 has not been screwed onto the engine block 26, the screws 40 hang freely in compression limiters 28 but will not fall out during transit. This means that the thermostat housing 24 can be supplied to a buyer with all of the components necessary to attach the thermostat housing 24 to the engine block 26 already pre-assembled.

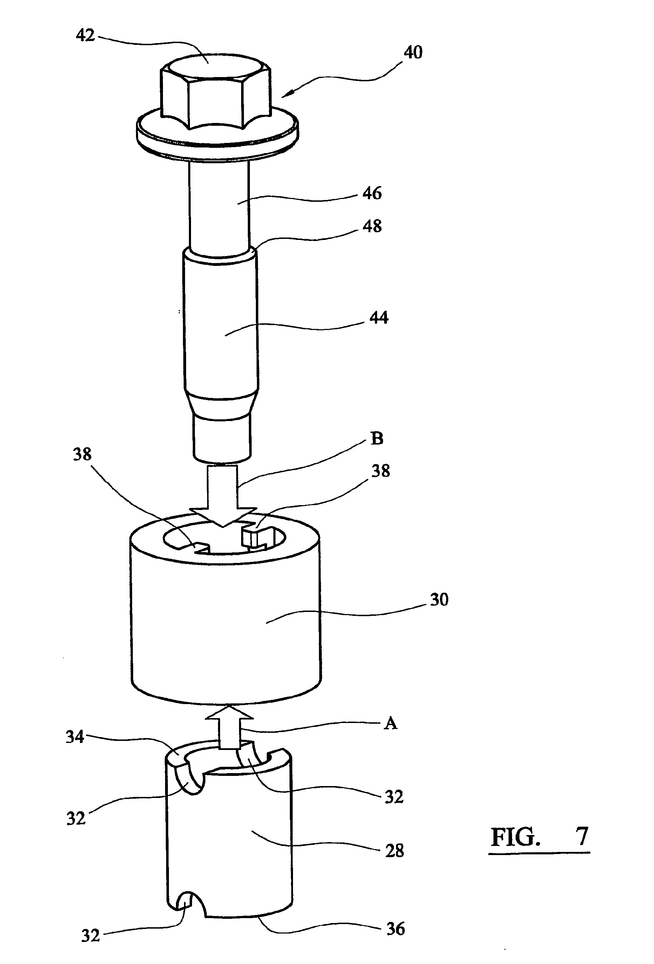

In order to construct the fastening assembly, the cylindrical boss 30 and tabs 38 are moulded integrally with the thermostat housing 24. The compression limiter 28 is then inserted into the cylindrical boss 30 in the direction of arrow A (Figure 7) in an interference fit. As the compression limiter 28 has notches 32 formed on both of its upper and lower edges 34 and 36, it does not matter which orientation the compression limiter 28 is in before it is inserted into the cylindrical boss 30. This simplifies production of the fastening assembly. The compression limiter 28 is inserted into the cylindrical boss 30 such that tabs 38 align with recesses 32 to ensure that the head 42 of the screw 40 contacts the upper edge 34 of the compression limiter 28, so that the compression limiter can support the compressive load from the screw 40.

Screw 40 is inserted into the cylindrical boss 30 and compression limiter 28 in the direction of arrow B, and can either be pushed down into the fastening assembly such that the tabs 38 slightly elastically and resiliently deform, or the screw 40 can be screwed into the fastening assembly such that the threads of the screw 40 drive a corresponding screw thread into the edges of tabs 38.

Alternatively, the screw 40 may be inserted into the cylindrical boss 30 in the direction of arrow B without the compression limiter 28 in place, and then the compression limiter 28 may be inserted into cylindrical boss 30 in the direction of arrow A. Since the screw 40 is inserted before the compression limiter 28, there will be enough room to insert the screw 40 without resistance from tabs 38. Insertion of the compression limiter 28 then moves the screw between the tabs 38, such that the tabs 38 retain the screw 40 in the boss 30. This can increase the speed at which the fastening assembly is constructed.

It will be appreciated by persons skilled in the art that the above embodiment has been described by way of example only and not in any limitative sense, and that various alterations and modifications are possible without departure from the scope of the invention as defined by the appended claims. It should be understood that even though the above embodiment has been described in connection with mounting a moulded plastic thermostat housing 24 onto a metallic engine block 26, the fastening assembly described could be used in any situation in which one component has to be fastened to another component. In particular, the fastening assembly described can be used when any moulded plastic component needs to be fastened to a component formed from a harder material.

## Claims

1. A fastening assembly for fastening a first component (24) to a second component (26), the assembly comprising:
a first component having at least one hole therethrough;
at least one sleeve (28) adapted to be disposed in a respective said hole for reinforcing the sides of the hole, wherein at least a part of said sleeve extends the entire axial length of the hole;
at least one screw (40) having a respective threaded portion (44) and adapted to extend through a respective said hole and sleeve such that said threaded portion projects beyond the corresponding sleeve to engage a second component; and
at least one projection (38) adapted to project inwardly in at least one said hole to abut said screw passing through said hole to resist removal of the screw from the hole;
**characterised in that** at least one said sleeve comprises two substantially diametrically opposed notches (32) formed at each end of the sleeve, each said notch adapted to engage a respective said projection (38), and wherein the at least one said sleeve has a substantially constant cross-section to enable the sleeve to be inserted into the hole in an interference fit.

2. An assembly according to claim 1, wherein at least one said projection is formed integrally with the first component.

3. An assembly according to claim 1 or 2, wherein at least one said screw further comprises a respective unthreaded portion (46) having a smaller diameter than the corresponding threaded portion, wherein at least one said projection is adapted to abut the unthreaded portion to resist removal of the screw from the hole.

4. An assembly according to claim 3, wherein the unthreaded portion of at least one said screw has a diameter such that there is a gap between the unthreaded portion of the respective screw and an inner surface of the corresponding sleeve when the unthreaded portion of the screw is disposed in the sleeve.

5. An assembly according to any one of the preceding claims, wherein at least one said sleeve is formed from a harder material than the portion of the first component in which the respective hole is disposed.

6. An assembly according to claim 5, wherein said portion of the first component is formed from moulded plastics material.

7. A method of forming a fastening assembly for fastening a first component (24) to a second component (26), the method comprising:
forming a hole in a first component;
forming a projection (38) that projects inwardly in said hole; and
**characterised by** inserting a sleeve (30) having two substantially diametrically opposed notches (32) formed at each end of the sleeve into the hole such that said projection engages one of the notches, wherein the sleeve has a substantially constant cross-section to enable the sleeve to be inserted into the hole in an interference fit and wherein at least part of the sleeve extends the entire axial length of the hole.

8. A method according to claim 7, further comprising inserting a screw (40) into the hole, the screw having a threaded portion (44) adapted to extend beyond the hole.

## Patentansprüche

1. Befestigungsanordnung zur Befestigung eines ersten Bauteils (24) an einem zweiten Bauteil (26), wobei die Anordnung Folgendes umfasst:
ein erstes Bauteil, das wenigstens ein durch es verlaufendes Loch hat,
wenigstens eine Buchse (28) zum Anordnen in einem jeweiligen genannten Loch zur Verstärkung der Seiten des Lochs, wobei wenigstens ein Teil der genannten Buchse sich durch die gesamte axiale Länge des Lochs erstreckt,
wenigstens eine Schraube (40), die einen jeweiligen Gewindeteil (44) hat und so ausgeführt ist, dass sie durch ein jeweiliges genanntes Loch und eine jeweilige genannte Buchse verläuft, so dass der genannte Gewindeteil über die entsprechende Buchse hinaus vorsteht, um mit einem zweiten Bauteil in Eingriff zu kommen, und
wenigstens einen Vorsprung (38), der ausgeführt ist, um in wenigstens einem genannten Loch einwärts vorzustehen, um an der genannten, durch das genannte Loch verlaufenden Schraube in Anlage zu sein, um dem Entfernen der Schraube aus dem Loch entgegenzuwirken,
**dadurch gekennzeichnet, dass** die genannte wenigstens eine Buchse zwei einander im Wesentlichen diametral entgegengesetzte Aussparungen (32) aufweist, die an jedem Ende der Buchse ausgebildet sind, wobei jede genannte Aussparung für den Eingriff eines jeweiligen genannten Vorsprungs (38) ausgeführt ist, und wobei die wenigstens eine genannte Buchse einen im Wesentlichen konstanten Querschnitt hat, damit die Buchse in Presspassung in das Loch eingesetzt werden kann.

2. Anordnung nach Anspruch 1, wobei der wenigstens eine genannte Vorsprung einstückig mit dem ersten Bauteil ausgebildet ist.

3. Anordnung nach Anspruch 1 oder 2, wobei die wenigstens eine genannte Schraube ferner einen jeweiligen nicht mit Gewinde versehenen Teil (46) aufweist, der einen kleineren Durchmesser als der entsprechende Gewindeteil hat, wobei der wenigstens eine genannte Vorsprung zur Anlage am nicht mit Gewinde versehenen Teil ausgeführt ist, um dem Entfernen der Schraube aus dem Loch entgegenzuwirken.

4. Anordnung nach Anspruch 3, wobei der nicht mit Gewinde versehene Teil von wenigstens einer genannten Schraube einen solchen Durchmesser hat, dass zwischen dem nicht mit Gewinde versehenen Teil der jeweiligen Schraube und einer Innenfläche der entsprechenden Buchse ein Zwischenraum besteht, wenn der nicht mit Gewinde versehene Teil der Schraube in der Buchse angeordnet ist.

5. Anordnung nach einem der vorhergehenden Ansprüche, wobei die wenigstens eine genannte Buchse aus einem härteren Material hergestellt ist als der Teil des ersten Bauteils, in dem das jeweilige Loch angeordnet ist.

6. Anordnung nach Anspruch 5, wobei der genannte Teil des ersten Bauteils aus geformtem Kunststoff hergestellt ist.

7. Verfahren zum Herstellen einer Befestigungsanordnung zum Befestigen eines ersten Bauteils (24) an einem zweiten Bauteil (26), wobei das Verfahren Folgendes umfasst:
Herstellen eines Lochs in einem ersten Bauteil,
Herstellen eines Vorsprungs (38), der einwärts in das genannte Loch vorsteht, und
**gekennzeichnet durch** Einsetzen einer Buchse (30), die zwei einander im Wesentlichen diametral entgegengesetzte Aussparungen (32) hat, die an jedem Ende der Buchse ausgebildet sind, in das Loch, so dass der genannte Vorsprung in einer der Aussparungen in Eingriff kommt, wobei die Buchse einen im Wesentlichen konstanten Querschnitt hat, damit die Buchse in Presspassung in das Loch eingesetzt werden kann, und wobei wenigstens ein Teil der Buchse sich **durch** die gesamte axiale Länge des Lochs erstreckt.

8. Verfahren nach Anspruch 7, das ferner das Einführen einer Schraube (40) in das Loch aufweist, wobei die Schraube einen Gewindeteil (44) hat, der so ausgeführt ist, dass er sich über das jeweilige Loch hinaus erstreckt.

## Revendications

1. Ensemble de fixation destiné à fixer un premier composant (24) à un deuxième composant (26), l'ensemble comprenant :
un premier composant possédant au moins un trou au travers de celui-ci,
au moins un manchon (28) adapté de façon à être disposé dans un trou respectif de façon à renforcer les côtés du trou, où au moins une partie dudit manchon s'étend sur la totalité de la longueur axiale du trou,
au moins une vis (40) possédant une partie filetée respective (44) et adaptée de façon à s'étendre au travers d'un desdits trous respectifs et d'un manchon de sorte que ladite partie filetée se projette au-delà du manchon correspondant de façon à entrer en prise avec un deuxième composant, et
au moins une projection (38) adaptée de façon à se projeter vers l'intérieur dans au moins un desdits trous de façon à venir buter contrer ladite vis passant au travers dudit trou pour résister au retrait de la vis du trou,
**caractérisé en ce qu'**au moins un desdits manchons comprend deux encoches (32) sensiblement diamétralement opposées formées à chaque extrémité du manchon, chacune desdites encoches étant adaptée de façon à entrer en prise avec une desdites projections respectives (38), et où le au moins un desdits manchons possède une section transversale sensiblement constante destinée à permettre au manchon d'être inséré dans le trou dans un ajustement serré.

2. Ensemble selon la Revendication 1, où au moins une desdites projections est formée intégralement avec le premier composant.

3. Ensemble selon la Revendication 1 ou 2, où au moins une desdites vis comprend en outre une partie non filetée respective (46) possédant un diamètre plus petit que la partie filetée correspondante, où au moins une desdites projections est adaptée de façon à venir buter contre la partie non filetée pour résister au retrait de la vis du trou.

4. Ensemble selon la Revendication 3, où la partie non filetée d'au moins une desdites vis possède un diamètre tel qu'il existe un espace entre la partie non filetée de la vis respective et une surface intérieure du manchon correspondant lorsque la partie non filetée de la vis est disposée dans le manchon.

5. Ensemble selon l'une quelconque des Revendications précédentes, où au moins un desdits manchons est formé à partir d'un matériau plus dur que la partie du premier composant dans laquelle le trou respectif est disposé.

6. Ensemble selon la Revendication 5, où ladite partie du premier composant est formée d'un matériau plastique moulé.

7. Procédé de formation d'un ensemble de fixation destiné à fixer un premier composant (24) à un deuxième composant (26), le procédé comprenant :
la formation d'un trou dans un premier composant,
la formation d'une projection (38) qui se projette vers l'intérieur dans ledit trou, et
**caractérisé par** l'insertion d'un manchon (30) possédant deux encoches (32) sensiblement diamétralement opposées formées à chaque extrémité du manchon dans le trou de sorte que ladite projection entre en prise avec l'une des encoches, où le manchon possède une section transversale sensiblement constante destinée à permettre au manchon d'être inséré dans le trou dans un ajustement serré et où au moins une partie du manchon s'étend sur la totalité de la longueur axiale du trou.

8. Procédé selon la Revendication 7, comprenant en outre l'insertion d'une vis (40) dans le trou, la vis possédant une partie filetée (44) adaptée de façon à s'étendre au-delà du trou.
